Europäisches Patentamt

European Patent Office

Office européen des brevets

(19)

(11) Veröffentlichungsnummer : **0 007 977**
**B2**

(12)

# NEUE EUROPÄISCHE PATENTSCHRIFT

(45) Veröffentlichungstag der neuen Patentschrift :
20.08.86

(21) Anmeldenummer : 79101533.2

(22) Anmeldetag : 21.05.79

(51) Int. Cl.⁴ : **C 04 B   2/12**

(54) **Verfahren zum Brennen von stückigem Brenngut sowie Ringschachtofen zu seiner Durchführung.**

(30) Priorität : 15.06.78 DE 2826167

(43) Veröffentlichungstag der Anmeldung :
20.02.80 Patentblatt 80/04

(45) Bekanntmachung des Hinweises auf die Patenterteilung : 30.12.81 Patentblatt 81/52

(45) Bekanntmachung des Hinweises auf die Entscheidung über den Einspruch : 20.08.86 Patentblatt 86/34

(84) Benannte Vertragsstaaten :
AT BE CH FR GB IT SE

(56) Entgegenhaltungen :
Keine

(73) Patentinhaber : Wärmestelle Steine und Erden GmbH
Klever Strasse 66
D-4000 Düsseldorf (DE)

(72) Erfinder : Beckenbach, Karl, Dipl.-Ing.
Eschenweg 2
D-4005 Meerbusch (DE)

(74) Vertreter : Goddar, Heinz J., Dr. et al
FORRESTER & BOEHMERT Widenmayerstrasse 4/l
D-8000 München 22 (DE)

EP 0 007 977 B2

**Beschreibung**

Die Erfindung betrifft einen Ringschachtofen nach dem ersten Teil des Patentanspruches 1.

Ringschachtöfen dieser Art, wie sie in den DE-C-12 14 590 und DE-C-12 81 111 beschrieben sind, haben sich in der Praxis hervorragend bewährt. Die gattungsgemäßen Ringschachtöfen dieser Art, bei denen ein Rekuperator zum Vorwärmen der Verbrennungsluft vorgesehen ist, ergeben mit relativ hoher Leistung einen einwandfrei gebrannten Kalk, der auch höchsten Anforderungen hinsichtlich Kohlensäurefreiheit und Reaktivität entspricht. Es hat sich aber herausgestellt, daß der Einsatz des Rekuperators, der bei hochprozentigem Kalkstein, also einem Kalkstein, der das Höchstmaß an aufzubringender Wärme erfordert und das Höchstmaß an entweichender Kohlensäure ergibt, vorgesehen sein muß, insofern gewisse Schwierigkeiten bereiten kann, als die einzelnen, von den noch heißen Rauchgasen durchströmten Rohre des Rekuperators zu Verstopfungen neigen. Die Rauchgase enthalten nämlich je nach Beschaffenheit des Brenngutes mehr oder weniger Staub, der sich im Inneren der Rohre absetzen kann und manchmal verhältnismäßig schwierig zu entfernen ist. Auch ist die Entfernung des Staubes nicht nur mit Schwierigkeiten verbunden und arbeitsaufwendig, sondern die Rekuperatorrohre können auch dabei, wenn auch nur teilweise, beschädigt werden.

Aus der DE-B-12 56 841 ist andererseits eine Regenerativschachtofenanordnung mit einem Innenschacht und einem hierzu konzentrischen, aus einer Anzahl voneinander getrennter Einzelschächte bestehenden Ringschacht bekannt, bei dem zwischen dem Innenschacht und den Einzelschächten schmale Öffnungen für den Gasdurchgang vorgesehen sind, die ebenfalls keinen freien Gasstrom gestatten.

Der Erfindung liegt die Aufgabe zugrunde, einen Ringschachtofen der eingangs genannten Art zu schaffen, bei dem die Betriebsführung bei vereinfachtem, kostengünstigerem Aufbau gegenüber dem bekannten Ringschachtofen verbessert ist.

Erfindungsgemäß wird diese Aufgabe bei einem Ringschachtofen der eingangs genannten Art durch die im kennzeichnenden Teil des Patentanspruches 1 aufgeführten Merkmale gelöst.

Besonders bevorzugte Ausführungsformen des erfindungsgemäßen Ringschachtofens sind Gegenstand der Patentansprüche 2 bis 8.

Verglichen mit dem eingangs beschriebenen Ringschachtofen nach dem Stand der Technik, besteht der wesentliche Gedanke (z. B. DE-C-11 57 133 ; DE-C-12 52 850 ; « H. Hofer : « Das Brennen von Kalk im Gleichstrom-Regenerativ-Schachtofen », aus « Zement — Kalk — Gips » Nr. 6, 1970, S. 277 und 278 ») darin, daß dort stets mehrere voneinander unabhängige Schächte für die Prozeßführung erforderlich sind, während beim erfindungsgemäßen Ringschachtofen nur ein einziger Ofenschacht vorgesehen ist, der durch den innen und außen feuerfest verkleideten Schachteinsatz, der soweit von oben in den Ofen hineinragt, daß sich ein wesentlicher Teil der Brennzone zwischen der zylindrischen Innenfläche der Ofenwandung und der ebenfalls zylindrischen Außenfläche des Schachteinsatzes bilden kann, in den Innenschacht und den hierzu konzentrischen Außenschacht unterteilt ist. Dieser Aufbau ist wesentlich kostengünstiger als derjenige der bekannten Ofenkonstruktion mit regenerativer Vorwärmung. Mit Hilfe des Brenngutes selbst — kein Rekuperator ist erforderlich ! — wird beim Ringschachtofen nach der Erfindung der in der Vorwärmzone vorhandene Wärmeüberschuß durch Vorwärmung der Verbrennungsluft zusätzlich ausgenutzt. Der Wärmeüberschuß der Rauchgase wird somit optimal zur Luftvorwärmung eingesetzt. Der Wärmeüberschuß der die Vorwärmzone durchströmenden, diese mit erhöhter Abgastemperatur verlassenden Rauchgase wird in vorteilhafter Weise dazu eingesetzt, ein weiteres, für den Prozeß benötigtes Medium, nämlich Verbrennungsluft, vorzuwärmen. Die Anordnung eines Schachtes statt mehrerer Schächte bringt noch den Vorteil der Einsparung von Wärme mit sich, da nur ein einziger Ofenschacht der abkühlenden Außenluft ausgesetzt ist.

Bei dem erfindungsgemäßen Ringschachtofen durchwandern die Brenn- bzw. Rauchgase einen wesentlichen Teil der Brennzone im Gleichstrom und passieren erst anschließend, nachdem sie dort den größten Teil ihres Wärmeinhaltes abgegeben haben, nach Mischung mit der von unten kommenden Kalkkühlluft mit verminderter Temperatur (zwischen etwa 1 100 °C und etwa 900 °C) die restliche Verbrennungszone, wodurch sich ein weiterer verfahrensmäßiger Vorteil ergibt.

Die Beschichkungsvorrichtung des erfindungsgemäßen Ringschachtofens ist, wie beansprucht, in vorteilhafter Weise so ausgebildet, daß abwechselnd der Innenschacht und der Ringschacht, mit jeweils dem gleichen Brenngutgewicht beschickt werden. Ist der rohrförmige Schachteinsatz, wie dies besonders bevorzugt ist, oben oberhalb der Vorwärmzone, mittels schwerer, an den Enden auf dem Ofenmantel aufliegender Träger aufgehängt, so daß er an seinem unteren Teil völlig frei von Unterstützungskonstruktionen ist, so ergibt sich insofern ein weiterer beträchtlicher Vorteil gegenüber den bekannten Kalk-Ofenkonstruktionen mit regenerativer Vorwärmung, als die Rauchgase frei und ohne hierfür erforderliche besondere Einrichtungen vom Innen- zum Ringschacht bzw. vom Ringschacht zum Innenschacht strömen können und sich jeweils, der natürlichen, durch keinerlei Einbauten behinderten Strömung folgend, gleichmäßig verteilen. Die erheblichen Schwierigkeiten, die sich bei manchen bekannten Kalk-Ofen-Konstruktionen mit regenerativer Vorwärmung einstellen, daß die Rauchgase jeweils in einem Ringraum gesammelt werden und erst dann in den nächsten Schacht gelangen, entfallen beim erfindungsgemäßen Ringschachtofen vollständig, da keinerlei Sammelringraum mit der hierfür notwendigen schwierigen Feuerfestkonstruktion erforderlich ist. Auch neigen derartige Sammelringräume, die bei erfindungsgemäßen Ringschachtofen nicht notwendig sind, stark zu Staubablagerungen und müssen häufig unter erheblichem Aufwand gereinigt werden.

Die Austragung des Ringschachtofens beim Schachtofen nach der Erfindung kann so erfolgen, daß entweder sowohl der Innenschacht als auch der Ringschacht gleichzeitig ober aber jeweils entweder der Ringschacht oder der Innenschacht entleert werden. Um jeweils gleiche Mengen austragen zu können, sind in vorteilhafter Weise an der Gicht Teufenanzeiger vorgesehen, welche über Regelmotoren eine derartige gesteuerte Betätigung der in diesem Fall vorgesehenen beiden Austragungsvorrichtungen ermöglichen, daß jeweils gleiche Mengen von gebranntem Gut aus dem Ringschacht und aus dem Innenschacht ausgetragen werden. Die Austrageanordnungen können dabei im wesentlichen einen Aufbau aufweisen, wie er aus der DE-C-12 73 750 bekannt ist, auf die insoweit hinsichtlich der Einzelheiten verwiesen wird.

Die Beschickungsvorrichtung des erfindungsgemässen Ringschachtofens weist im übrigen in der bereits weiter oben skizzierten Weise im wesentlichen zwei Schleusensysteme auf, die einmal zum Abdichten des unter Saugzug stehenden Ofens gegenüber der Aussenatmosphäre und zum anderen dazu dienen, Gasströmungen zwischen dem Ringschacht und dem Innenschacht im Bereich der Beschickungszone zu verhindern. Dabei bildet die bei der beschriebenen bevorzugten Ausführungsform der Erfindung vorgesehene Beschickungsglocke mit einer oberhalb hiervon angeordneten Klappe eine erste Schleuse, die das Ofeninnere von der Aussenatmosphäre trennt. Die erste und die zweite Schleusenglocke bilden ein Schleusensystem, das im Ofenkopf die unterschiedlichen Gasverhältnisse der beiden Schächte voneinander trennt und somit einen Kurzschluss von Verbrennungs- oder Frischluft einerseits und Rauch- oder Abgas andererseits verhindert.

Weitere Merkmale und Vorteile der Erfindung ergeben sich aus den Ansprüchen und aus der nachfolgenden Beschreibung, in der ein Ausführungsbeispiel anhand der Zeichnung im einzelnen erläutert ist.

Dabei zeigt :

Figur 1 einen Ringschachtofen nach der Erfindung im Längsschnitt durch eine erste, die Längsachse des Ofens enthaltende Ebene in einer ersten Betriebsstellung ; und

Figur 2 den in Fig. 1 dargestellten Ringschachtofen im Längsschnitt in einer zweiten, die Ofenlängsachse enthaltenden Ebene in einer zweiten Betriebsstellung.

Wie Fig. 1 zeigt, weist der Ringschachtofen nach der Erfindung bei dem dort wiedergegebenen Ausführungsbeispiel eine zylindrische Ofenwandung 10 auf, innerhalb derer konzentrisch mit ihr ein ebenfalls zylindrischer Schachteinsatz 12 angeordnet ist. Der Schachteinsatz 12 ist bei dem gezeigten Ausführungsbeispiel mittels schwerer, an den Enden auf der Ofenwandung 10 aufliegender Träger aufgehängt, so dass er in seinem in den durch die Ofenwandung 10 definierten Teil des Ringschachtofens hineinragenden unteren Teil völlig frei von Unterstützungskonstruktionen ist. Weiterhin lässt die Zeichnung erkennen, dass der Schachteinsatz 12 als Hohlmantel ausgebildet ist, dessen unten abgeschlossener Ringkanal 14 von Verbrennungsluft durchströmt wird, die sich hierdurch in vorteilhafter Weise erwärmt. Selbstverständlich sind sowohl die Innenfläche der Ofenwandung 10 als auch die innere und äussere Zylinderfläche des Schachteinsatzes 12 mit feuerfestem Material ausgekleidet.

Durch die Ofenwandung 10 sind, wie Fig. 1 bei dem dort wiedergegebenen Schnitt erkennen lässt, eine Anzahl von der Zuführung von Brenn- oder Heizgasen dienenden Lanzen 16, 18 geführt, die teils, die Wandung des Schachteinsatzes 12 durchsetzend, in einen innerhalb des Schachteinsatzes 12 gebildeten Innenschacht 20 münden und teils ausschliesslich die Ofenwandung 10 durchsetzend, in einem Ringschacht 22 enden, der zwischen der Ofenwandung 10 und dem Schachteinsatz 12 gebildet ist. In Fig. 2, bei welcher der Längsschnitt durch eine andere, die Ofenlängsachse enthaltende Schnittebene geführt ist, sind lediglich zwei Lanzen 16 der erstgenannten Art zu erkennen. Es liegt aber auf der Hand, dass sowohl in den Innenschacht 20 als auch in den Ringschacht 22 jeweils mehrere, gleichmässig über den Ofenumfang verteilte Lanzen 16, 18, die in einer noch zu beschreibenden Weise mit Brenngasen beaufschlagbar sind, münden. Die Lanzen 16 liegen im Ringschachtofen nach der Erfindung etwa auf dem Niveau des Übergangs von der, von oben gesehen, an die bekannte Beschickungszone anschliessenden Vorwärmzone zu der Brennzone. Da die Lanzen sich somit in einer Ofenzone mit einer Temperatur von etwa 800 °C befinden, sind sie verhältnismässig feuerfest, beispielsweise aus Sicromal bestehend, ausgeführt und können gegebenenfalls durch die Gaszuführung umströmende Luft, welche die Verbrennung der Brenngase einleiten kann, gekühlt werden. Es ist nicht nur möglich, die Lanzen 16, 18 in der in der Zeichnung wiedergegebenen Weise die Ofenwandung 10 durchsetzend auszubilden, vielmehr können die Lanzen, insbesondere die in den Innenschacht 20 mündenden, auch an Teilen der Beschickungsvorrichtung befestigt und von oben in den Ofen eingeführt werden.

Die Zeichnung zeigt weiterhin, dass am oberen Ende der etwa oberhalb des Niveaus der Lanzen 16, 18 beginnenden und sich nach oben bis in den Bereich der durch die noch zu erläuternde Beschickungszone definierten Beschickungsvorrichtung erstreckenden Beschickungszone der Ringschacht 22 einerseits und der Innenschacht 20 andererseits mit einer Gasleitung 24 bzw. 26 verbunden sind, deren Wirkungsweise noch weiter unten erläutert wird. Die Beschickungsvorrichtung weist eine höhenverstellbare Beschickungsglocke 28 auf, die aus einer in der Zeichnung ausgezogen gezeigten oberen Stellung, in der sie eine erste Schüssel 30, die von der Ofenwand nach schräg unten vorspringt und eine erste zentrale Öffnung 32 aufweist, brenngutdicht abschliesst, in eine zweite, in der Zeichnung gestrichelt wiedergegebene untere Stellung absenkbar ist, in der die erste zentrale Öffnung 32 freigegeben ist. Unterhalb der ersten Schüssel 30 ist eine zweite Schüssel 34 mit einer zweiten zentralen Öffnung 36 angeordnet. Die zweite zentrale Öffnung 36 ist durch eine Leitglocke 38 in deren Mittelstellung brenngutdicht verschliessbar. Aus dieser mittleren Schliessstellung ist die Leitglokke 38 in die in der Zeichnung gezeige obere, innerhalb des Volumens der zweiten Schüssel 34 gelegene Stellung anhebbar, in der die zweite zentrale Öffnung 36 freigegeben ist. Weiterhin ist die Leitglocke 38 aus der Schliess-Mittelstellung in die in der Zeichnung gezeigte untere Stellung absenkbar, in der sie brenngutdicht an einer Mittelöffnung 40 anliegt, von der zunächst nach schräg unten und aussen und dann senkrecht nach unten, in den oben offenen Ringschacht 22 mündend, ein Beschickungsringraum 42 ausgeht. Unterhalb einer schrägen Abrutschfläche 44 des Beschickungsringraumes 42 bzw. unterhalb der Mittelöffnung 40 ist eine dritte Schüssel 46 mit einer dritten zentralen Öffnung 48 angeordnet, die durch eine heb- und senkbare erste Schleusenglocke 50 brenngut- und gasdicht abschliessbar ist. Unterhalb der dritten Schüssel 46 ist eine vierte Schüssel 52 mit einer vierten zentralen Öffnung 54 angeordnet, welch letztere wiederum durch eine zweite Schleusenglocke 56 brenngut- und gasdicht abschliessbar ist. In der Zeichnung sind die beiden Schleusenglocken 50, 56 in ausgezogenen Linien in ihrer jeweils abgesenkten, die dritte zentrale Öffnung 48 bzw. die vierte zentrale Öffnung 54 abschliessenden Stellung gezeigt, während die angehobene Offenstellung beider Schleusenglocken gestrichelt wiedergegeben ist. Oberhalb der oberen Schüssel 30 bzw. der Beschickungsglocke 28 ist eine verschliessbare Klappe 58 vorgesehen.

Am unteren Ende des Ringschachtofens ist, wie die Zeichnung erkennen lässt, ein erster, feststehender Austragetisch 60 angeordnet, dessen Durchmesser so bemessen ist, dass der äussere Tischrand etwa bis zur Mitte des Ringschachtes 22 reicht. Am oberen Ende eines feststehenden vertikalen Rohres 62 ist ein Verteilerkonus 64 befestigt, dem durch das Rohr 62 Luft zugeführt wird und der an seinem unteren Ende dicht oberhalb des ersten Austragetisches 60 einen nockenartigen ersten, mit einem Drehantrieb verbundenen Austragestösel 66 aufweist. Beim Drehen des Austragestössels 66 wird durch diesen das auf dem ersten Austragetisch abgeböschte, im wesentlichen aus dem Innenschacht 20 nach unten abrutschende gebrannte Gut nach aussen über den Rand des ersten Austragetisches 20 abgeschoben. Gegebenenfalls kann der Verteilerkonus 64 nicht gezeigte Durchtrittsöffnungen für die durch das Rohr 62 zugeführte Luft aufweisen.

Mit Abstand oberhalb des ersten Austragetisches 60 ist ein feststehender zweiter Austragetisch 68 angeordnet, der ringförmig ausgebildet ist und sich von der Ofenwandung aus gesehen so weit nach innen erstreckt, dass er den ersten Austragetisch 60 überlappt. Oberhalb des zweiten Austragetisches 68 ist eine kegelstumpfförmige Leitfläche 70 feststehend angeordnet. Ein drehbarer zweiter Austragestössel 72 schiebt das auf dem zweiten Austragetisch 68 abgeböschte, im wesentlichen aus dem Ringschacht 22 stammende gebrannte Gut nach aussen über den Rand des zweiten Austragetisches 68 ab.

Der Ringschachtofen nach der Erfindung, wie er in der Zeichnung dargestellt ist, arbeitet wie folgt :

In der in Fig. 1 wiedergegebenen Betriebsstellung ist die Gasleitung 24 als Verbrennungsluft-Zuführung und die Gasleitung 26 als Rauchgas-Abführung geschaltet. Die Lanzen 16 sind abgeschaltet, während die in den Ringschacht 22 führenden Lanzen 18 mit Brenngasen beaufschlagt werden. Die Beschickungsglocke 28 oder die Klappe 58 und mindestens eine der Schleusenglocken 50, 56 befinden sich in ihrer geschlossenen Stellung, wodurch der Ringschacht 22 bzw. des Beschikkungsringraum 42 einerseits gegen Atmosphäre abgeschlossen und zum anderen gegenüber dem Innenschacht 20 abgetrennt ist. Von unten wird dem Ringschachtofen Kühlluft zugeführt.

Hierbei ergeben sich die nachfolgenden Strömungsverhältnisse : Die Verbrennungsluft durchströmt die Leitung 24, die in dieser Betriebsstellung in die oberhalb des Niveaus der Lanzen 16, 18 innerhalb des Ringschachtes 22 vorhandene Vorwärmzone sowie die vom Niveau der Lanzen 16, 18 aus nach unten anschliessende, im Ringraum sich nach unten erstreckende Brennzone, die durch die verbrennenden Brenn- oder Heizgase erhitzt wird, im Gleichstrom. Vom unteren Ende des Ringschachtes 22 aus steigen die Rauchgase zusammen mit der von unten zugeführten Kühlluft im Gegenstrom durch den Innenschacht 20 auf und werden durch die Gasleitung 26 abgeführt, wobei ein kleinerer Teil der Brennzone, die sich in dieser Betriebsstellung im wesentlichen unterhalb des Niveaus der Lanzen 16, 18 innerhalb des Ringschachtes 22 befindet, sich noch im Gegenstrom in den Innenschacht 20 hinein erstreckt. Die Rauchgase sowie die aufsteigende Kühlluft erwärmen hierbei das etwa oberhalb des Niveaus der Lanzen 16, 18 — die Lanzen 16 sind natürlich nach wie vor abgeschaltet — befindliche Brenngut. Die Luft- und Gasströmung erfolgt im übrigen in der in Fig. 1 durch Pfeile schematisch wiedergegebenen Art und Weise.

Ist der Ofen für eine gewisse Zeit in der in Fig. 1 wiedergegebenen Betriebsstellung betrieben worden, so erfolgt ein Umschalten auf die in Fig. 2 gezeigte Betriebsstellung bzw. Betriebsweise, bei der statt der in den Ringschacht 22 mündenden Lanzen 18 ausschliesslich die in den Innenschacht 20 mündenden Lanzen 16 mit Brenngasen beaufschlagt werden, wobei die Leitung 24 als Rauchgas-Abführung und die Leitung 26 als Verbrennungsluft-Zuführung geschaltet sind. Die Abdichtung durch die verschiedenen Glocken in der Beschickungszone ist mit der anhand von Fig. 1 erläuterten identisch. Jetzt muss das Beschikkungsgut bei entsprechender Stellung der Leitglocke 38 in den Innenschacht 20 geführt werden. In dieser Betriebsstellung durchströmt die durch die Gasleitung 26 zugeführte, Verbrennungsluft die nunmehr innerhalb des Innenschachtes 20 oberhalb des Niveaus der Lanzen 16, 18 angeordnete, bei der Betriebsweise von Fig. 1 stark erhitzte Vorwärmzone und gelangt zo zum Niveau der Lanzen 16. Von dort aus erstreckt sich — wiederum im Gleichstrom — der wesentliche Teil der Brennzone innerhalb des Innenschachtes 20 nach unten, von wo die Rauchgase dann — ein kleiner Teil der Brennzone liegt wiederum innerhalb des Ringschachtes 22 — durch den Ringschacht 22 nach oben steigen und dabei die nunmehr in dessen oberem Teil vorgesehene « Zone » bzw. das darin befindliche Brenngut verhältnismässig stark erwärmen. Im Anschluss an diese Betriebsstellung wird wiederum auf die in Fig. 1 gezeigte umgeschaltet.

Dadurch, dass abwechselnd die in Fig. 1 einerseits und die in Fig. 2 andererseits dargestellten Betriebsweisen verwirklicht werden, erfolgt in höchst vorteilhafter Weise eine regenerative Vorwärmung der Verbrennungsluft, wodurch der jeweils bei der vorangegangenen Betriebsweise in der dort vorhandenen Vorwärmzone gebildete Wärmeüberschuss abgebaut und ausgenutzt wird.

Das Beschicken des erfindungsgemässen Ringschachtofens erfolgt in der Weise, dass zunächst, bei geschlossener Beschickungsglocke 28, die Klappe 58 geöffnet und eine Brenngutcharge in die erste Schüssel 30 eingegeben wird. Anschliessend wird, bei die zentrale Öffnung 36 der zweiten Schüssel verschliessender Leitglokke 38, die Beschickungsglocke 28 in die in der Zeichnung wiedergegebene gestrichelte untere Stellung abgesenkt — die Klappe 58 ist zwischenzeitlich geschlossen worden —, so dass das in die erste Schüssel 30 eingegebene gut nunmehr in die zweite Schüssel 34 gelangen kann. Soll die Brenngutcharge nun in den zentralen Innenschacht 20 eingefüllt werden, so wird, bei geschlossener erster Schleusenglocke 50, die Leitglocke 38 aus der die zweite zentrale Öffnung 36 der zweiten Schüssel 34 abschliessenden Mittelstellung in die obere Stellung angehoben, wodurch die in die zweite Schüssel 34 gelangte Brenngutcharge durch die zweite zentrale Öffnung 36 und die Mittelöffnung 40 hindurch in die dritte Schüssel 46 fällt. Ein anschliessendes Anheben der ersten Schleusenglocke 50, bei die vierte zentrale Öffnung 54 der vierten Schüssel 52 verschliessender zweiter Schleusenglocke 56 befördert die Brenngutcharge aus der dritten Schüssel 46 in die vierte Schüssel 52. Anschliessend wird die Schleusenglocke 50 wieder in die in der Zeichnung ausgezogen wiedergegebene, die dritte zentrale Öffnung 48 brenngut- und gasdicht verschliessende untere Stellung abgesenkt, woraufhin sich ein Anheben der zweiten Schleusenglocke 56 in die in der Zeichnung gestrichelt wiedergegebene obere Stellung anschliesst, in der die in die vierte Schüssel 52 gelangte Brenngutcharge in den Innenschacht 20 fallen kann.

Soll hingegen der Ringschacht 22 beschickt werden, so wird die Leitglocke 38 aus der Mittelstellung, in der sie die zweite zentrale Öffnung 36 der zweiten Schüssel 34 verschliesst, in die untere die Mittelöffnung 40 des Beschickungsringraumes 42 abdeckende untere Stellung gebracht, wodurch die in die zweite Schüssel 34 beförderte Brenngutcharge unmittelbar in den Beschikkungsringraum 42 gelangt und, entlang der Abrutschfläche 44 abrutschend, in den Ringschacht 22 gefördert wird.

Die Austragestössel 72, 66 werden abwechselnd betätigt, wodurch abwechselnd gebranntes Gut vorzugsweise aus dem Bereich des Ringschachtes 22 bzw. aus dem Bereich des Innenschachtes 20 ausgetragen wird. Selbstverständlich ist dafür Sorge getragen, dass dementsprechend gleichmässig auch eine Brenngutbeschickung des Ringschachtes 22 einerseits und des Innenschachtes 20 andererseits erfolgt. Dies kann beispielsweise durch einen an der Gicht vorgesehenen, nicht gezeigten Teufenanzeiger gewährleistet werden, mit dem jeweils festgestellt wird, welche Mengen bei der Betätigung des zweiten Austragestössels 72 bzw. des ersten Austragestössels 66 aus dem Ofen ausgetragen worden sind, damit eine entsprechende Nachfüllung erfolgen kann. Mit anderen Worten, die Brenngutmengen, die dem Innenschacht 20 einerseits und dem Ringschacht 22 andererseits zugeführt werden, werden ebenso wie das ausgetragene Brenngut aus beiden Schächten gleich gehalten.

## Patentansprüche

1. Ringschachtofen mit im wesentlichen kreisförmigem Querschnitt zum Brennen von stückigem Brenngut, wie Kalkstein, Dolomit, Magnesit oder dergleichen, mit Beschickungs-, Vorwärm-, Brenn- und Kühlzone, einem koaxial angeordneten, unter offenen rohrförmigen, nahe seinem oberen Ende an der Ofenkonstruktion aufgehängten Schachteinsatz, einem zwischen dem Schachteinsatz und der Ofenwandung gebildeten, zu einer oberhalb der Vorwärmzone angeordneten Beschickungsvorrichtung offenen Ringschacht, einem innerhalb des Schachteinsatzes gebildeten rohrförmigen Innenschacht, entlang der Brennzone in der Ofenwandung angeordneten Brenngaszuführungen und einer Kühlluftzuführung sowie einer Austrageanordnung am unteren Ofenende, dadurch gekennzeichnet, daß der Schachteinsatz (12) oben offen ist, daß die Beschickungsvorrichtung eine Einrichtung (38) zum wahlweisen Aufgeben des Brenngutes in den Ringschacht (22) einerseits und in den Innenschacht (20) andererseits aufweist, wobei die Beschikkungsvorrichtung von der oben gelegenen Einfüllöffnung für das Brenngut gesehen aufeinanderfolgend mit vertikalem Abstand angeordnet eine von der Ofenwandung nach schräg unten vorstehende erste Schüssel (30) mit einer ersten zentralen Öffnung (32), eine zweite Schüssel (34) mit einer zweiten zentralen Öffnung (36), einen darunter allseitig nach schräg außen und unten verlaufenden, in den Ringschacht (22) mündenden Beschickungsringraum (42), dessen Abrutschfläche (44) oben durch eine kreisförmige Mittelöffnung (40) begrenzt ist, eine unterhalb der Mittelöffnung (40) mit Abstand angeordnete dritte Schüssel (46) mit einer dritten zentralen Öffnung (48), eine darunter angeordnete vierte Schüssel (52) mit einer in den Innenschacht (20) mündenden vierten zentralen Öffnung (54), eine zwischen einer die erste zentrale Öffnung (32) gegen Brenngut abdichtenden ersten und einer die Brenngutzufuhr aus der ersten Schüssel (30) zu der zweiten Schüssel (34) freigebenden zweiten Stellung heb- und senkbare Beschickungsglocke (28), eine aus einer die zweite zentrale Öffnung (36) im wesentlichen brenngutdicht abschließenden ersten Stellung in eine innerhalb des Volumens der zweiten Schüssel (34) gelegene zweite Stellung abhebbare und in eine die Mittelöffnung (40) im wesentlichen brenngutdicht abdeckende dritte Stellung absenkbare Leitglocke (38), eine aus einer die dritte zentrale Öffnung (48) brenngut- und gasdicht verschließenden ersten in eine innerhalb des Volumens der dritten Schüssel (46) gelegene zweite Stellung anhebbare erste Schleusenglocke (50) sowie eine aus einer die vierte zentrale Öffnung (54) brenngut- und gasdicht verschließenden ersten in eine innerhalb des Volumens der vierten Schüssel (52) gelegene zweite Stellung anhebbare zweite Schleusenglocke (56) aufweist, wobei der Durchmesser der Mittelöffnung (40) ≤ dem Durchmesser der zweiten zentralen Öffnung (36) ist, daß ein erster Teil (18) der Brenngaszuführungen (18, 16) in den Ringschacht (22) und ein zweiter Teil (16) in den Innenschacht (20) münden.

2. Ringschachtofen nach Anspruch 1, dadurch gekennzeichnet, daß der Schachteinsatz (12) durch radiale, sich allmählich nach außen verbreiternde, oberhalb der Brenngaszuführungen (16, 18) angeordnete, dachförmig ausgebildete Rippen mit der Ofenwandung (10) verbunden ist.

3. Ringschachtofen nach Anspruch 1 oder 2, dadurch gekennzeichnet, daß der Schachteinsatz (12) als Hohlmantel ausgeführt ist, dessen Ringkanal (14) durch hindurchströmende, sich hierdurch erwärmende Verbrennungsluft kühlbar ist.

4. Ringschachtofen nach einem der vorangehenden Ansprüche, dadurch gekennzeichnet, daß der Beschickungsringraum (42) von der Mittelöffnung (40) aus zunächst nach schräg außen und unten verläuft und im Anschluß hieran einen senkrechten, in den Ringschacht (22) einmündenden Ringabschnitt aufweist.

5. Ringschachtofen nach einem der vorangehenden Ansprüche, dadurch gekennzeichnet, daß unterhalb des unteren Schachtrandes ein erster feststehender Austragetisch (66), auf dem sich im wesentlichen das aus dem Innenschacht (20) stammende gebrannte Gut abböscht, ein das abgeböschte Gut über den Rand des ersten Austragetisches (60) schiebendes, zentral angeordnetes erstes Abstreiforgan mit einem im wesentlichen konischen ersten Verteilerkörper (64) und einem von diesem dicht oberhalb des ersten Austragetisches radial nach außen vorstehenden ersten Austragestößel (66) ein zweiter, ringförmig konzentrisch mit Abstand zu dem ersten Austragetisch (66) gelegener feststehender zweiter Austragetisch (68) auf dem sich im wesentlichen ausschließlich das aus dem Ringschacht (22) stammende gebrannte Gut abböscht, und ein das abgeböschte Gut über den Rand des zweiten Austragetisches (68) schiebendes zentral angeordnetes zweites Abstreiforgan mit einer im wesentlichen kegelstumpfförmigen Leitfläche (70) und einem dicht oberhalb des zweiten Austragetisches radial nach außen vorstehenden zweiten Austragestößel (72) angeordnet sind, wobei die beiden Austragestößel abwechselnd zum Austragen von aus dem Innenschacht bzw. aus dem Ringschacht stammenden gebranntem Gut drehbar sind.

**Claims**

1. An annular shaft furnace of substantially circular cross-section for the calcination of material in lump form, e.g. limestone, dolomote, magnesite or the like, comprising a charging, preheating, calcination and cooling zone, a coaxially disposed tubular shaft insert open at the bottom and suspended near its top end from the furnace structure, an annular shaft which is formed between the shaft insert and the furnace wall and which is open to a charging device disposed beneath the preheating zone, a tubular inner shaft formed inside the shaft insert, combustion gas supply means disposed along the calcination zone in the furnace wall, a cooling air supply and a discharge system at the bottom end of the furnace, characterised in that the shaft insert (12) is open at the top ; the charging device comprises means (38) for optionally charging the material into the annular shaft (22) on the one hand and into the inner shaft (20) on the other hand, the charging device comprising, in sequence from the top charging aperture for the material for calcination and in vertical spaced relationship : a first tray (30) projecting downwardly at an angle from the furnace wall and having a first central aperture (32), a second tray (34) with a second central aperture (36), a charging chamber (42) which extends downwards and out at an angle in all directions therebeneath and which leads into the annular shaft (22) and the chute surface (44) of which is bounded at the top by a circular central aperture (40), a third tray (46) with a third central aperture (48), said third tray being disposed in spaced relationship below the central aperture (40), a fourth tray (52) disposed therebeneath and having a fourth central aperture (54) leading into the inner shaft (20), a charging bell (28) adapted to be raised and lowered between a first position in which it seals off the first central aperture (32) from the material for calcination and a second position in which it opens the supply of material for calcination from the first tray (30) to the second tray (34), a guide bell (38) which is adapted to be raised from a first position in which it closes the second central aperture (36) so that it is substantially sealed off from the material for calcination, into a second position situated within the volume of the second tray (34), and which is lowerable into a third position covering the central aperture (40) so that it is substantially sealed off from the material for calcination, a first locking bell (50) which is raisable from a first position in which it closes the third central aperture (48) so that it is sealed off from the material for calcination and the gases, into a second position situated within the volume of the third tray (46), and a second locking bell (56) which is adapted to be raised from a first position in which it closes the fourth central aperture (54) so that it is sealed off from the material for calcination and the gases, into a second position situated within the volume of the fourth tray (52), the diameter of the central aperture (40) being equal to or less than the diameter of the second central aperture (36) ; some (18) of the combustion gas supply means (18, 16) lead into the annular shaft (22) and some (16) into the inner shaft (20) ; and the inner shaft (20) and annular shaft (22) are adapted to regenerative operation.

2. An annular shaft furnace according to claim 1, characterised in that the shaft insert (12) is connected to the furnace wall (10) by radial roof-shaped ribs disposed above the combustion gas supply means (16, 18) and gradually widening in the outward direction.

3. An annular shaft furnace according to claim 1 or 2, characterised in that the shaft insert (12) is in the form of a hollow jacket, the annular passage (14) of which is coolable by means of air for combustion flowing therethrough and heating up in consequence.

4. An annular shaft furnace according to any one of the preceding claims, characterised in that the annular charging space (42) extends initially at an angle outwards and downwards from the central aperture (40) and is then followed by a vertical annular portion leading into the annular shaft (22).

5. An annular shaft furnace according to any one of the preceding claims, characterised in that there are disposed beneath the bottom edge of the shaft : a first stationary discharge table (66) on which calcined material originating mainly from the inner shaft (20) is deposited, a centrally disposed first stripper means which pushes the deposited material over the edge of the first discharge table (60) and which has a substantially conical first distributor member (64) and a first discharge ram (66) projecting radially outwards from the distributor member (64) closely above the first discharge table, a second stationary discharge table (68) which is situated in the form of a ring concentrically to and spaced from the first discharge table (66) and on which calcined material originating mainly only from the annular shaft (22) is deposited, and a centrally disposed second stripper means which pushes the deposited material over the edge of the second discharge table (68) and which has a substantially frusto-conical guide surface (70) and a second discharge ram (72) projecting radially outwards closely above the second discharge table, the two discharge rams being rotatable alternately for discharging calcined material originating from the inner shaft and from the annular shaft.

### Revendications

1. Four à cuve annulaire à section sensiblement circulaire pour la calcination de matière en morceaux telle que calcite, dolomie, giobertite ou matière analogue, comportant une zone de chargement, une zone de préchauffage, une zone de calcination et une zone de refroidissement, un élément de cuve intercalaire tubulaire, ouvert en bas, disposé coaxialement et suspendu à l'ossature du four au voisinage de son extrémité supérieure, une cuve annulaire formée entre cet élément intercalaire et la paroi du four et ouverte vers un appareil de chargement placé au-dessus de la zone de préchauffage, une cuve intérieure tubulaire formée à l'intérieur de l'élément intercalaire, des amenées de gaz combustible ménagées dans la paroi du four le long de la zone de calcination, et une amenée d'air de refroidissement et ainsi qu'un dispositif de défournement à l'extrémité inférieure du four, caractérisé par le fait que l'élément intercalaire (12) est ouvert en haut, que l'appareil de chargement présente un dispositif (38) pour le chargement à volonté de la matière à calciner dans la cuve annulaire (22), d'une part, et dans la cuve intérieure (20) d'autre part, l'appareil de chargement présentant successivement, de haut en bas à partir de l'orifice de chargement situé en haut, une première cuvette (30) saillant obliquement de la paroi du four vers le bas et pourvue d'un premier orifice central (32), une deuxième cuvette (34) pourvue d'un deuxième orifice central (36), un espace annulaire de chargement (42) s'étendant tout autour, obliquement vers l'extérieur et vers le bas, et débouchant dans la chambre annulaire (22), et dont la surface de glissement (44) est limitée en haut par un orifice central circulaire (40), une troisième cuvette (46) placée à distance sous l'orifice central (40) et pourvue d'un troisième orifice central (48), une quatrième cuvette (52) placée au-dessous pourvue d'un quatrième orifice central (54) débouchant dans la chambre intérieure (20), une cloche de chargement (28) pouvant monter et descendre entre une première position, où elle bouche le premier orifice central (32) de façon étanche à la matière à calciner et une deuxième position où elle dégage le passage de la matière à calciner de la première cuvette (30) à la deuxième (34), une cloche directrice (38) pouvant monter d'une première position où elle bouche le deuxième orifice central (36) de façon pratiquement étanche à la matière à calciner à une deuxième position située à l'intérieur de la deuxième cuvette (34) et descendre jusqu'à une troisième position où elle couvre l'orifice central (40) de façon pratiquement étanche à la matière à calciner, une première cloche écluse (50) pouvant monter d'une première position où elle bouche le troisième orifice central (48) de façon étanche à la matière à calciner et aux gaz à une deuxième position située à l'intérieur de la troisième cuvette (46), et une deuxième cloche écluse (56) pouvant monter d'une première position où elle bouche le quatrième orifice central (54) de façon étanche à la matière à calciner et aux gaz à une deuxième position située à l'intérieur de la quatrième cuvette (52), le diamètre de l'orifice central (40) étant inférieur ou égal au diamètre du deuxième orifice central (36), qu'une première partie (18) des amenées de gaz combustible (16, 18) débouchent dans la cuve annulaire (22) et une deuxième partie (16) dans la cuve intérieure (20) et que la cuve intérieure (20) et la cuve annulaire (22) peuvent fonctionner avec régénération.

2. Four à cuve annulaire selon la revendication 1, caractérisé par le fait que l'élément intercalaire (12) est relié à la paroi (10) du four par des nervures radiales en forme de toit s'élargissant progressivement vers l'extérieur et placée au-dessus des amenées de gaz combustible (16, 18).

3. Four à cuve annulaire selon d'une des revendications 1 ou 2, caractérisé par le fait que l'élément intercalaire (12) est constitué d'une chemise creuse dont le canal annulaire (14) peut être refroidi par de l'air comburant y circulant en s'échauffant.

4. Four à cuve annulaire selon l'une des revendications précédentes, caractérisé par le fait que la chambre annulaire de chargement (42) s'étend d'abord, à partir de l'orifice central (40), vers l'extérieur et le bas, puis présente ensuite une portion annulaire verticale débouchant dans la cuve annulaire (22).

5. Four à cuve annulaire selon l'une des revendications précédentes, caractérisé par le fait que sont disposés, sous le bord inférieur de la cuve, une première table fixe de défournement (60) sur laquelle se met en talus sensiblement la matière calcinée venant de la cuve intérieure (20), un premier organe d'évacuation placé au centre poussant la matière talutée au-delà du bord de la première table de défournement (60) et comportant un premier corps répartiteur (64) sensiblement conique et un premier poussoir de défournement (66) saillant radialement de ce corps répartiteur vers l'extérieur juste au-dessus de la première table de défournement, une deuxième table fixe de défournement (68) coaxiale à la première (60) et située à une certaine distance d'elle, sur laquelle se met sensiblement en talus seulement la matière calcinée venant de la chambre annulaire (22), et un deuxième organe d'évacuation placé au centre poussant la matière talutée au-delà du bord de la deuxième table de défournement (68) et comportant une surface directrice (70) sensiblement tronconique et un deuxième poussoir de défournement (72) saillant radialement vers l'extérieur juste au-dessus de la deuxième table de défournement, les deux poussoirs de défournement pouvant tourner alternativement pour le défournement de la matière calcinée venant de la cuve intérieure et de celle venant de la cuve annulaire.